# EUROPÄISCHE PATENTANMELDUNG

(11) **EP 1 086 793 A1**
(43) Veröffentlichungstag der Anmeldung: **28.03.2001**
(21) Anmeldenummer: 00117789.8
(22) Anmeldetag: 18.08.2000
(51) Int. Cl.: B28C 5/38, C04B 38/10

(54) **Verfahren und Vorrichtung zur Herstellung von gasblasenhaltigen Werkstoffen**

(30) Priorität: 23.09.1999 DE 19945568
(71) Anmelder: ispo GmbH, D-65830 Kriftel (DE)
(72) Erfinder: Luft, Ewald Dr., 55278 Dexheim (DE)
(74) Vertreter: Weber, Dieter, Dr.

(57) **Zusammenfassung**

In einem Verfahren zur Herstellung von gasblasenhaltigen Werkstoffen, bei dem man in einer Mischvorrichtung Werkstofftrockenmaterial mit Wasser oder einer anderen Flüssigkeit vereinigt und in einer Mischpumpe mischt, wobei die Mischpumpe einen im wesentlichen zylindrischen Stator (21) und einen sich dann in Längsrichtung erstreckenden und um die Längsachse drehenden Rotor (22) aufweist, führt man dem Werkstoffmaterial-Flüssigkeitsgemisch während des Mischvorganges durch eine Gaseinlaßöffnung (24) in der Statorwand Gas zu, wobei das Verhältnis von zugeführtem Gasvolumen zu der Menge an durchlaufendem Werkstoff oder der Druck des zugeführten Gases im wesentlichen konstant gehalten wird. Eine Mischvorrichtung zur Herstellung von gasblasenhaltigen Werkstoffen weist einen Aufnahmebehälter (10) zur Aufnahme von Werkstofftrockenmaterial mit einer Einlaßöffnung (8) und einer Auslaßöffnung (9), eine Durchfeuchtungskammer (11), die über die Auslaßöffnung (9) mit dem Aufnahmebehälter (10) verbunden ist, wenigstens einen Flüssigkeitseinlaß (14), der in die Durchfeuchtungskammer (11) mündet, eine Fördereinrichtung (12), die in dem Aufnahmebehälter (10) und/oder der Durchfeuchtungskammer (11) angeordnet ist und für einen Transport von Werkstofftrockenmaterial aus dem Aufnahmebehälter in die Durchfeuchtungskammer ausgelegt ist, eine mit dem Ausgang der Durchfeuchtungskammer (11) verbundene Mischpumpe mit im wesentlichen zylindrischem Stator (21) mit einem Einlaßende und einem gegenüberliegenden Auslaßende und einem Rotor (22), der sich im Inneren des Stators (21) in axialer Richtung erstreckt, wobei die Innenwandflächen des Stators (21) und die Außenwandflächen des Rotors (22) so ausgebildet sind, daß Werkstoffmaterial bei Drehung des Rotors in dem Stator in Längsrichtung befördert wird, auf und ist dadurch gekennzeichnet, daß in der Statorwand wenigstens eine Gaseinlaßöffnung (24) vorgesehen ist, die in das Innere des Stators (21) mündet, und eine Gaszuführeinrichtung mit einer Gasstromreguliereinrichtung (26), die so ausgelegt ist, daß die in den Stator eingeleitete Gasmenge und/oder der in den Stator eingeleitete Gasdruck einstellbar ist.

## Beschreibung

Die Erfindung betrifft ein Verfahren zur Herstellung von gasblasenhaltigen Werkstoffen, wie Mörtel, Putz oder Beton, insbesondere Zement und/oder kunstharzgebundenem Mörtel oder Beton, mit einem definierten oder einstellbaren Gehalt an Gasblasen oder Gasporen. Des weiteren betrifft die Erfindung eine Mischvorrichtung zur Herstellung solcher gasblasenhaltiger Werkstoffe sowie einen Stator für eine solche Mischvorrichtung.

Bei der Zubereitung mineralischer oder kunstharzgebundener Werkstoffe, wie Mörtel, Putz oder Beton, für eine Weiterverarbeitung auf einer Baustelle wird die jeweilige Trockensubstanz des Werkstoffes mit Wasser versetzt und bis zu ausreichender Homogenität gemischt. Die Mischung des Trockenmaterials mit dem Wasser kann von Hand oder maschinell zubereitet werden. Bei der insbesondere für geringere Mengen üblichen Handmischung werden Trockenmaterial und Wasser in einem Gefäß zusammengegeben und mit einem geeigneten Rührwerkzeug, wie z. B. einem geeignet geformten Bohrmaschinenaufsatz, gemischt. Für die Zubereitung größerer Mengen Mörtel oder Putz ist die Handmischung zeit- und kraftaufwendig. Da man bei der Handmischung in der Regel offene Wannen verwendet, wird beim Mischvorgang Umgebungsluft mit in das Material eingearbeitet. Die Menge an eingearbeiteter Luft ist jedoch sehr gering und hängt stark vom Mischvorgang selbst ab, wie z.B. von der Heftigkeit und der Art des Mischwerkzeuges, so daß die Menge an eingearbeiteter Luft stets variiert und nicht vorherbestimmbar ist.

Für die maschinelle Verarbeitung von Mörtel und anderen mineralischen oder kunstharzgebundenen Werkstoffen stehen Vorrichtungen zur Verfügung, in denen eingefülltes Trockenmaterial automatisch mit Wasser versetzt und gemischt wird. Solche Vorrichtungen sind häufig so ausgestaltet, daß die zubereitete Werkstoffmischung direkt aus der Vorrichtung oder unter Zwischenlagerung in einem Sammelbehälter über einen Schlauch, der am Ende eine entsprechende Düse aufweist, auf eine Wand oder ähnliches aufgespritzt werden kann. Um das Aufspritzen durch eine Düse zu ermöglichen, muß der Werkstoff in der Vorrichtung unter Druck gesetzt werden. Hierfür üblicherweise verwendete Vorrichtungen, sogenannte Mischpumpenmaschinen oder Durchlaufmischer, haben einen Aufnahmebehälter für das Werkstofftrockenmaterial, von dem aus das Trockkenmatenal mittels einer Förderschnecke oder ähnlichem in eine Durchfeuchtungskammer transportiert wird. An der Durchfeuchtungskammer sind ein oder mehrere Einfüllstutzen für den Wasserzufluß vorgesehen. Um eine homogene Vermischung des Trockenmaterials mit dem Wasser zu erreichen, ist unmittelbar im Anschluß an die Durchfeuchtungskammer eine Schneckenmischpumpe vorgesehen, bestehend aus einem Stator oder Schneckenmantel und einem sich darin in Längsrichtung erstreckenden, um die Längsachse drehbaren Rotor oder einer Schnecke. Der Schneckenmantel besteht in der Regel aus Gummi und ist an den Innenwänden so ausgestaltet, daß er mit der Schnecke für einen Transport des Werkstoffs in Wirkeingriff tritt. Aus Stabilitätsgründen und zur Befestigung an der Vorrichtung ist der Schneckenmantel aus Gummi in der Regel von einem weiteren zylindrischen Mantel aus Kunststoff oder Metall umgeben. Der Schneckenmantel oder Stator selbst ist ein Verschleißteil und muß bei derartigen Vorrichtungen häufig ausgewechselt werden.

Durch die Drehung des Rotors bzw. der Schnecke wird das mit Wasser versetzte Werkstofftrockenmaterial von der Durchfeuchtungskammer aus durch den Stator hindurch befördert und dabei gut durchmischt. Der für das Ausspritzen des Werkstoffes aus der Vorrichtung erforderliche Druck baut sich bei derartigen Vorrichtungen durch das Hindurchpressen des Materials durch die vorbeschriebene Mischpumpe (Stator plus Rotor) auf. Der Druck nimmt hierbei von dem mit der Durchfeuchtungskammer verbundenen Einlaß der Mischpumpe bis hin zu dem Auslaß der Mischpumpe zu. Es wurde auch festgestellt, daß im Bereich des Einlasses der Mischpumpe ein Unterdruck herrschen kann. Vom Auslaß der Mischpumpe wird der Werkstoff direkt oder über einen weiteren zwischengeschalteten Nachmischer der Abgabeeinrichtung zugeführt, die wiederum mit Ventilen, Düsen und/oder einem Manometer ausgerüstet sein kann. Da durch das System nur geringe Mengen Luft bis in die Mischpumpe vordringen kann, ist der erhaltene Werkstoff, wie z. B. Mörtel oder Putz, weitgehend frei von Luftblasen und somit sehr kompakt und schwer. Um etwas mehr Luft in das Material einzuarbeiten, ist es bekannt, Statoren zu verwenden, die in der Nähe des Einlasses eine Bohrung in der Seitenwand aufweisen, durch die aufgrund des Unterdrucks in diesem Bereich der Mischpumpe Luft einströmen kann. Es hat sich jedoch gezeigt, daß der Gehalt an Luft in dem erhaltenen Werkstoff aufgrund von Schwankungen des Unterdrucks im Anfangsbereich der Mischpumpe nicht konstant ist, was zu variierenden Materialeigenschaften führt. Des weiteren können so auch nur geringe Mengen an Luft eingearbeitet werden. Außerdem neigen die angebrachten Bohrungen dazu zu verstopfen, da sich die Druckverhältnisse in der Mischpumpe beim Anhalten der Maschine ändern und Material durch die Bohrung nach außen gedrückt werden kann. Wenn das Material dann antrocknet oder aushärtet, ist die Luftzufuhr bei erneutem Anlaufen der Maschine behindert oder ganz unterbunden.

Die Aufgabe der Erfindung besteht nun dann, eine gegenüber dem Stand der Technik verbesserte Mischvorrichtung und ein Verfahren zur Herstellung von gasblasenhaltigen Werkstoffen bereitzustellen. Insbesondere soll die Erfindung die Herstellung von Werkstoffen mit einem höheren als dem nach den herkömmlichen Verfahren erreichten und/oder einem definierten Gasblasengehalt erreichen.

Diese Aufgabe wird gelöst durch eine Mischvorrichtung der eingangs genannten Art mit einem Aufnahmebehälter zur Aufnahme von Werkstofftrockenmaterial mit einer Einlaßöffnung und einer Auslaßöffnung,
einer Durchfeuchtungskammer, die über die Auslaßöffnung mit dem Aufnahmebehälter verbunden ist,
wenigstens einem Flüssigkeitseinlaß, der in die Durchfeuchtungskammer mündet,
einer Fördereinrichtung, die in dem Aufnahmebehälter und/oder der Durchfeuchtungskammer angeordnet ist und für einen Transport von Werkstofftrockenmaterial aus dem Aufnahmebehälter in die Durchfeuchtungskammer ausgelegt ist,
einer mit dem Ausgang der Durchfeuchtungskammer verbundenen Mischpumpe mit einem im wesentlichen zylindrischen Stator mit einem Einlaßende und einem gegenüberliegenden Auslaßende und mit einem Rotor, der sich im Inneren des Stators in axialer Richtung erstreckt, wobei die Innenwandflächen des Stators und die Außenwandflächen des Rotors so ausgebildet sind, daß Werkstoffmaterial bei Drehung des Rotors in dem Stator in Längsrichtung befördert wird,
   dadurch gekennzeichnet, daß an der Statorwand wenigstens eine Gaseinlaßöffnung vorgesehen ist, die ins Innere des Stators mündet, und eine Gaszuführeinrichtung mit einer Gasstromreguliereinrichtung, die so ausgelegt ist, daß die in den Stator eingeleitete Gasmenge und/oder der in den Stator eingeleitete Gasdruck einstellbar ist.

Die Aufgabe wird weiterhin gelöst durch einen Stator für eine Mischvorrichtung der eingangs genannten Art mit einem im wesentlichen zylindrischen Mantel, einem Einlaß- und einem Auslaßende, dadurch gekennzeichnet, daß an der Statorwand wenigstens eine Gaseinlaßöffnung vorgesehen ist, die in das Innere des Stators mündet und einen Anschluß für eine Gaszuführeinrichtung aufweist.

Die Aufgabe wird weiterhin gelöst durch ein Verfahren zur Herstellung von gasblasenhaltigen Werkstoffen, bei dem man in einer Mischvorrichtung Werkstofftrockenmaterial mit Wasser oder einer anderen Flüssigkeit vereinigt und in einer Mischpumpe mischt, wobei die Mischpumpe einen im wesentlichen zylindrischen Stator und einen sich darin in Längsrichtung erstreckenden und um die Längsachse drehenden Rotor aufweist, dadurch gekennzeichnet, daß man dem Werkstoffmaterial-Wasser-Gemisch während des Mischvorgangs durch eine Gaseinlaßöffnung in der Statorwand Gas zuführt, wobei das Verhältnis von zugeführtem Gasvolumen zu der Menge an durchlaufendem Werkstoff oder der Druck des zugeführten Gases im wesentlichen konstant gehalten wird.

Die Anwendung der vorliegenden Erfindung ist mit einer Reihe von Vorteilen verbunden. Das Einblasen von Gas bzw. Luft in den Werkstoff führt zur Ausbildung von Poren in dem Endprodukt, wobei der Porengehalt durch Variation der eingeleiteten Gasmenge einstellbar ist. Durch die Ausbildung von Poren in dem Werkstoff verringert sich in Bezug auf das Volumen des Endprodukts der Feststoffanteil gegenüber herkömmlich hergestellten Werkstoffen ohne oder mit geringen Gaseinschlüssen. Dadurch läßt sich beispielsweise der Verbrauch von Trockenmittel um bis zu 50 % je nach eingeleitetem Gasvolumen reduzieren und somit Material und Kosten einsparen.

Aufgrund der Porenbildung haben die erfindungsgemäß hergestellten Werkstoffe andere Materialeigenschaften als Werkstoffe, die mit den herkömmlichen Vorrichtungen und nach dem herkömmlichen Verfahren hergestellt sind. Diese Materialeigenschaften lassen sich durch Einleitung definierter Gasmengen einstellen. Je höher der Gasporengehalt des Werkstoffes ist, desto geringer ist sein spezifisches Gewicht. Durch die Einstellung des Luftporengehaltes kann auch die Stabilität des Werkstoffes beeinflußt werden. So können beispielsweise nach dem erfindungsgemäßen Verfahren Putze für Innenwände und Fassaden hergestellt werden, die aufgrund der porösen Struktur weniger zu Rißbildung neigen als herkömmliche Putze. Weiterhin ändert sich durch den Einschluß von Gasblasen in den Werkstoffen deren Wärmeleitfähigkeit. So eignen sich erfindungsgemäß hergestellte Putze oder andere Werkstoffe beispielsweise zur Wärmedämmung und können statt üblicher Polystyrolplatten einfach auf Wände oder Fassaden aufgespritzt werden. Die Materialien bieten neue Dämmeigenschaften, eine schnellere und einfachere Verarbeitung als herkömmliche Materialien und man erhält auch keine die Dämmwirkung unterbrechenden Fugen, wie man sie beispielsweise an den Stoßkanten von Dämmplatten hat. Die Erfindung bietet somit eine Vielzahl von Anwendungsmöglichkeiten zur Herstellung von Werkstoffen mit vorteilhaften Eigenschaften.

Das in der Mischpumpe in den Werkstoff eingeleitete Gas ist üblicherweise Luft, die mit Hilfe eines Kompressors unter Druck gesetzt wird. Das Gas kann jedoch auch aus einer Druckflasche zugeführt werden. Für Spezialprodukte können auch andere Gase als Luft verwendet werden, wie z. B. solche mit besonderen Wärmeleitfähigkeiten, um spezielle Dämmstoffe herzustellen. Des weiteren können andere Gase verwendet werden, welche die Aushärtung oder andere Eigenschaften des Werkstoffs beeinflussen. Da herkömmliche Putzmaschinen in der Regel mit einem Kompressor ausgestattet sind, kann dieser beispielsweise über einen Bypass auch dazu mitverwendet werden, den für das Einleiten von Luft erforderlichen Druck aufzubauen.

Soll das eingeleitete Gasvolumen im Verhältnis zur Menge an durchlaufendem Werkstoff, d. h. der Fördermenge der Mischpumpe, eingestellt werden, so ist es zweckmäßig, daß die Gasstromreguliereinrichtung mit einem Durchflußregler ausgestattet ist. Mit handelsüblichen Durchflußreglern läßt sich das einströmende Gasvolumen pro Zeiteinheit einstellen. Da die Fördermenge an durchlaufendem Werkstoff pro Zeiteinheit im wesentlichen konstant bzw. meßbar ist, läßt sich die eingeleitete Gasmenge leicht einstellen. Es kann auch vorteilhaft sein, daß die Gasstromreguliereinrichtung zusätzlich zu dem Durchflußregler oder alternativ dazu einen Druckminderer aufweist. Führt man die Gaseinleitung nicht volumenabhängig über einen Durchflußregler sondern druckabhängig über einen Druckminderer durch, so kann dies zu anderen vorteilhaften Materialeigenschaften führen.

Bei Werkstoffen, wie Mörtel oder Putz, hat sich eine Einleitung von 10 bis 40 Volumen-% Gas bzw. Luft als besonders vorteilhaft erwiesen.

Besonders zweckmäß ist es, wenn die Gaseinlaßöffnung in der vom Einlaßende des Stators der Mischpumpe aus ersten Hälfte der Länge des Stators, vorzugsweise im ersten Drittel, angeordnet ist. Im Bereich des Einlaßendes der Mischpumpe herrscht beim Betrieb in der Regel ein Unterdruck bzw. ein sehr geringer Druck, der zum Auslaßende der Mischpumpe hin stark ansteigt. Die Einleitung des Gases in dem Bereich der Mischpumpe mit geringem Druck hat den Vorteil, daß der Gasdruck selbst nicht besonderes hoch sein muß. Außerdem führt die frühe Einleitung des Gases in die Mischpumpe zu einer besseren Verteilung des Gases in dem Werkstoff über die restliche Wegstrecke der Mischpumpe als eine Gaseinleitung in der Nähe des Auslaßendes. Für die Einarbeitung des Gases in den Werkstoff hat es sich auch als vorteilhaft erwiesen, wenn die Gaseinlaßöffnung so ausgebildet ist, daß das Gas in Bezug auf die Senkrechte zur Drehachse des Rotors in einem spitzen Winkel in Drehrichtung des Rotors, d. h. mit der Drehbewegung des Rotors, eingeleitet wird. Das eingeleitete Gas muß so nicht gegen das vom Rotor mitgeführte Material eingepreßt werden. Da die Gaseinlaßöffnung bei einer solchen Anordnung der Bewegungsrichtung des von dem Rotor mitgeführten Materials abgewandt ist, wird sie auch nicht so leicht mit Material zugesetzt.

Handelsübliche Mischpumpen für Putzmaschinen arbeiten mit Förderschnecken, wobei entweder der Rotor oder die Statorinnenwand oder beide Teile Schneckenwindungen aufweisen. Bei einer solchen Schneckenmischpumpe hat es sich erfindungsgemäß als besonderes zweckmäßig erwiesen, wenn der Abstand der Gaseinlaßöffnung vom Einlaßende des Stators aus wenigstens der Länge einer Schneckenwindung in axialer Richtung entspricht. Hierdurch wird verhindert, daß eingeleitetes Gas aufgrund des Einblasdrucks in größeren Mengen durch die Einlaßöffnung der Mischpumpe heraus und in die Durchfeuchtungskammer und in den Aufnahmebehälter entweichen kann.

Üblicherweise ist das Auslaßende der Mischpumpe über einen Stutzen mit einer Leitung oder einem Schlauch verbunden, durch den der gemischte Werkstoff abgegeben wird. Druckschwankungen und Unregelmäßigkeiten beim Betrieb der Vorrichtung können dazu führen, daß sich zwischen materialgefüllten Bereichen der Leitung Gasblasen ausbilden. Dies führt z. B. beim Aufsprühen von Putz auf Wände zu einer ungleichmäßigen Materialabgabe, was den gleichmäßigen Werkstoffauftrag und den Arbeitsablauf stört. Um dies zu verhindern, ist es zweckmäßig, wenn nach dem Auslaßende des Stators noch ein Nachmischer vorgesehen ist. Dieser sorgt für eine weitere Durchmischung und eine gleichmäßige Abgabe des Werkstoffs an die Leitung.

Weitere Ausführungsformen, Eigenschaften und Vorteile der Erfindung werden anhand der nachfolgenden Beispiele und Figuren näher erläutert.
- Figur 1: zeigt eine schematische Querschnittsdarstellung einer Putzmaschine mit einer erfindungsgemäßen Mischpumpe.
- Figur 2: zeigt eine schematische Querschnittsdarstellung der Mischpumpe aus Figur 1 mit Gaseinlaßöffnung und Gasstromreguliereinrichtung.

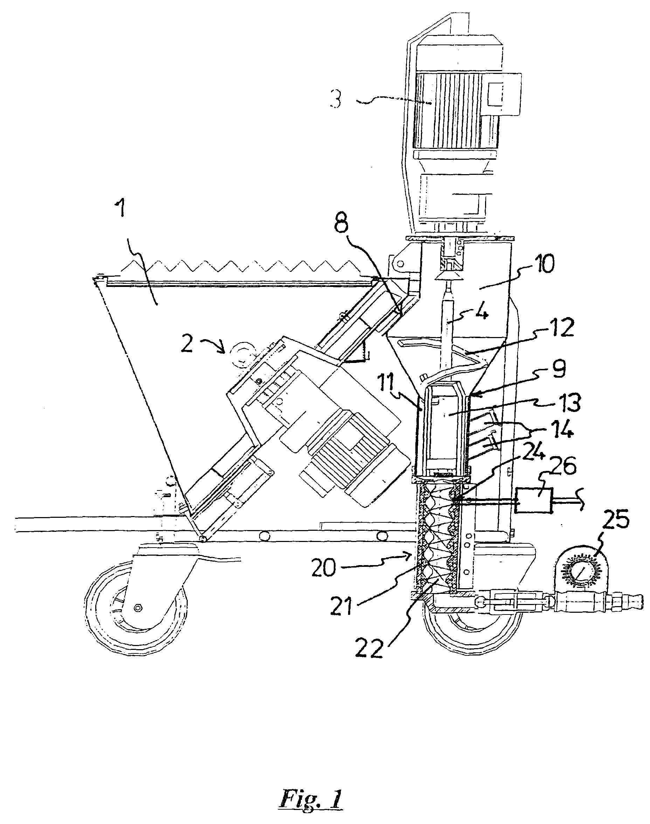

Figur 1 zeigt eine herkömmliche Putzmaschine zum Mischen von Trockenmaterial mit Wasser und anschließender Abgabe des gemischten Fertigproduktes unter Druck zum Aufspritzen auf eine Wandfläche oder eine Fassade, wobei die üblicherweise verwendete Mischpumpe durch eine erfindungsgemäße Mischpumpe 20 ersetzt ist. Zur Herstellung von Mörtel oder Putz wird entsprechendes Trockenmaterial aus dem Vorratsbehälter 1 mittels einer Vorrichtung 2 durch die Einlaßöffnung 8 in den Aufnahmebehälter 10 befördert. Über dem Aufnahmebehälter 10 ist ein Motor 3 vorgesehen, der über eine Welle 4 eine Förderwendel 12 antreibt. Das Trockenmaterial aus dem Aufnahmebehälter 10 wird mittels der Förderwendel 12 in die Durchfeuchtungskammer 11 befördert. Die Durchfeuchtungskammer 11 weist zwei Stutzen 14 auf, durch die Wasser in die Durchfeuchtungskammer 11 eingeleitet wird. Ein ebenfalls von der Welle 4 angetriebener Rührer 13 sorgt für eine grobe Vermengung des Trockenmaterials mit dem Wasser. Am unteren Ende der zylinderförmigen Durchfeuchtungskammer 11 schließt sich eine Mischpumpe 20 mit einem Stator 21 und einem Rotor 22, welcher ebenfalls über die Welle 4 angetrieben wird, an. Der Stator 21 besteht aus einer äußeren Hülle aus Kunststoff oder Metall und einem inneren Mantel aus Gummi. Die Statorinnenwand ist mit schneckenförmigen Windungen versehen. Der Rotor 22 ist ebenfalls mit schneckenförmigen Windungen versehen und wird von der Welle 4 um eine gegenüber der Mittelachse des Stators exentrisch angeordnete Drehachse bewegt. Alternativ kann die Statorinnenwand auch mit regelmäßig beabstandeten, ringförmigen Wülsten versehen sein.

Der Stator 21 weist im oberen Bereich der Statorwand in der Nähe der Einlaßöffnung, jedoch unterhalb der ersten Schneckenwindung des Rotors 22, eine Gaseinlaßöffnung 24 auf. Die Gaseinlaßöffnung ist über eine Leitung oder einen Schlauch mit einer in Figur 1 schematisch dargestellten Gasstromreguliereinrichtung 26 verbunden.

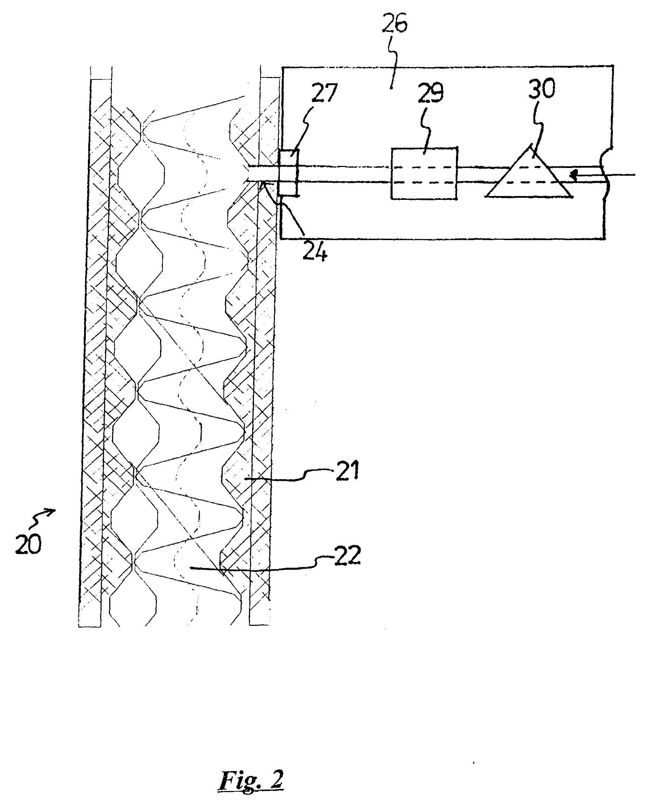

Figur 2 zeigt eine vergrößerte Darstellung der Mischpumpe 20 mit Gaseinlaßöffnung 24 und Gasstromreguliereinrichtung 26. Wie es schematisch durch einen Pfeil dargestellt ist, wird Druckluft in der Gasstromreguliereinrichtung zunächst durch einen Druckminderer 30 und anschließend durch einen Durchflußregler 29 geleitet und der Mischpumpe zugeführt. Je nach Druck der zugeführten Luft, kann die Gasstromreguliereinrichtung 26 auch ohne Druckminderer arbeiten.

Am Anschluß der Luftzufuhrleitung an der Gaseinlaßöffnung 24 der Mischpumpe ist ein Ventil 27 vorgesehen, das bei einer Umkehr der Druckverhältnisse zwischen dem Innenraum der Mischpumpe und der Luftzuführung schließt und verhindert, daß Mörtel- oder Putzmaterial in die Luftzufuhrleitung eindringt. Das Ventil 27 kann ein Rückschlagventil, ein Magnetventil oder ähnliches sein.

### Beispiele 1 - 3

Für Vergleichsversuche wurde eine Putzmaschine der Firma PFT, Iphofen, Modell G5, verwendet. Die Maschine war mit einem handelsüblichen Stator D4-3 ausgerüstet, der in erfindungsgemäßer Weise mit einer Gaseinlaßöffnung und einer Gaszuführeinrichtung versehen war. Hinter dem erfindungsgemäßen Mischer war ein Nachmischer nachgeschaltet mit weiterhin einem Abgabeschlauch von 25 m Länge und 25 mm Durchmesser

Mit der erfindungsgemäßen Vorrichtung wurde unter gleichen Bedingungen Verbundmörtel (Ispos Nr. 1 VBM Klebe- und Armierungsmörtel, vertrieben von Ispo GmbH, Kriftel) unter Einblasen verschiedener Mengen von Luft hergestellt. Die eingesetzten Wasser- und Luftmengen sowie die Daten der erhaltenen Mörtel gehen aus Tabelle 1 hervor. Der erhaltene Mörtel wurde auf eine Fläche aufgespritzt und der Verbrauch an Trockenmaterial gemessen (kg Trockenmaterial/m² Fläche/mm Auftragsdicke). Durch das Einblasen von Luft konnte der Verbrauch an Trockenmaterial gesenkt werden. Der Luftporengehalt und die pro Zeiteinheit abgegebene Menge an Mörtel stieg dagegen an.

**Tabelle 1**

| **Beispiel** | **1** | **2** | **3** |
|---|---|---|---|
| Wassermenge (l/h) (an der Maschine) | 200 | 190 | 190 |
| Luftmenge (l/h) (eingeblasen) | 0 | 200 | 300 |
| Förderdruck (bar) | 24 | 22 | 20 |
| | | | |

| **Mörteldaten:** | | | |
|---|---|---|---|
| Wassergehalt (g/kg) (errechnet) | 280 | 270 | 260 |
| Ausbreitmaß (cm) | 17 | 16 | 16 |
| Rohdichte (kg/l) | 1,48 | 1,30 | 1,16 |
| Luftporen-Gehalt (%) | 14 | 23 | 29 |
| Fördermenge (l/min) | 12,7 | 14,2 | 15,1 |
| Verbrauch (kg/m²/mm) (Trockenmaterial) | 1,15 | 1,02 | 0,92 |

## Patentansprüche

1. Mischvorrichtung zur Herstellung von gasblasenhaltigen Werkstoffen mit
einem Aufnahmebehälter (10) zur Aufnahme von Werkstofftrockenmaterial mit einer Einlaßöffnung (8) und einer Auslaßöffnung (9),
einer Durchfeuchtungskammer (11), die über die Auslaßöffnung (9) mit dem Aufnahmebehälter (10) verbunden ist,
wenigstens einem Flüssigkeitseinlaß (14), der in die Durchfeuchtungskammer (11) mündet,
einer Fördereinrichtung (12), die in dem Aufnahmebehälter (10) und/oder der Durchfeuchtungskammer (11) angeordnet ist und für einen Transport von Werkstofftrockenmaterial aus dem Aufnahmebehälter in die Durchfeuchtungskammer ausgelegt ist,
einer mit dem Ausgang der Durchfeuchtungskammer (11) verbundenen Mischpumpe mit im wesentlichen zylindrischem Stator (21) mit einem Einlaßende und einem gegenüberliegenden Auslaßende und einem Rotor (22), der sich im Inneren des Stators (21) in axialer Richtung erstreckt, wobei die Innenwandflächen des Stators (21) und die Außenwandflächen des Rotors (22) so ausgebildet sind, daß Werkstoffmaterial bei Drehung des Rotors in dem Stator in Längsrichtung befördert wird,
**dadurch gekennzeichnet, daß** in der Statorwand wenigstens eine Gaseinlaßöffnung (24) vorgesehen ist, die in das Innere des Stators (21) mündet, und eine Gaszuführeinrichtung mit einer Gasstromreguliereinrichtung (26), die so ausgelegt ist, daß die in den Stator eingeleitete Gasmenge und/oder der in den Stator eingeleitete Gasdruck einstellbar ist.

2. Vorrichtung nach Anspruch 1, dadurch gekennzeichnet, daß die Gasstromreguliereinrichtung (26) einen Durchflußregler (29) und/oder einen Druckminderer (30) aufweist.

3. Vorrichtung nach einem der Ansprüche 1 oder 2, dadurch gekennzeichnet, daß die Gaseinlaßöffnung (24) in der vom Einlaßende des Stators (21) aus ersten Hälfte der Länge des Stators, vorzugsweise im ersten Drittel, angeordnet ist.

4. Vorrichtung nach einem der Ansprüche 1 bis 3, dadurch gekennzeichnet, daß die Gaseinlaßöffnung (24) so ausgebildet ist, daß das Gas in Bezug auf eine Senkrechte zur Drehachse des Rotors in einem spitzen Winkel in Drehrichtung des Rotors eingeleitet wird.

5. Vorrichtung nach einem der Ansprüche 1 bis 4, dadurch gekennzeichnet, daß die Rotoraußenfläche und/oder die Statorinnenwand Schneckenwindungen aufweist.

6. Vorrichtung nach Anspruch 5, dadurch gekennzeichnet, daß der Abstand der Gaseinlaßöffnung (24) vom Einlaßende des Stators (21) aus wenigstens der Länge einer Schneckenwindung in axialer Richtung entspricht.

7. Vorrichtung nach einem der Ansprüche 1 bis 6, dadurch gekennzeichnet, daß das Auslaßende des Stators (21) mit einem Nachmischer (26) verbunden ist.

8. Stator (21) für eine Mischvorrichtung zur Herstellung von gasblasenhaltigen Werkstoffen mit einem im wesentlichen zylindrischen Mantel, einem Einlaßende und einem Auslaßende, dadurch gekennzeichnet, daß in der Statorwand wenigstens eine Gaseinlaßöffnung (24) vorgesehen ist, die in das Innere des Stators mündet und einen Anschluß für eine Gaszuführeinrichtung aufweist.

9. Stator (21) nach Anspruch 8, dadurch gekennzeichnet, daß die Gaseinlaßöffnung (24) in der vom Einlaßende des Stators aus ersten Hälfte der Länge des Stators, vorzugsweise im ersten Drittel, angeordnet ist.

10. Stator nach einem der Ansprüche 8 oder 9, dadurch gekennzeichnet, daß die Gaseinlaßöffnung (24) so ausgebildet ist, daß Gas in einem spitzen Winkel in Bezug auf die Senkrechte zur Längsachse des Stators eingeleitet wird.

11. Stator nach einem der Ansprüche 8 bis 10, dadurch gekennzeichnet, daß die Statorinnenwand Schneckenwindungen oder regelmäßig beabstandete, ringförmig in Umfangsrichtung verlaufende Erhebungen und Vertiefungen aufweist.

12. Stator nach Anspruch 11, dadurch gekennzeichnet, daß der Abstand der Gaseinlaßöffnung (24) vom Einlaßende des Stators aus wenigstens der Länge einer Schneckenwindung in axialer Richtung oder dem Abstand zwischen zwei Erhebungen oder Vertiefungen an der Statorinnenwand entspricht.

13. Verfahren zur Herstellung von gasblasenhaltigen Werkstoffen, bei dem man
in einer Mischvorrichtung Werkstofftrockenmaterial mit Wasser oder einer anderen Flüssigkeit vereinigt und in einer Mischpumpe mischt, wobei die Mischpumpe einen im wesentlichen zylindrischen Stator (21) und einen sich dann in Längsrichtung erstreckenden und um die Längsachse drehenden Rotor (22) aufweist,
**dadurch gekennzeichnet, daß** man dem Werkstoffmaterial-Flüssigkeits-Gemisch während des Mischvorgangs durch eine Gaseinlaßöffnung (24) in der Statorwand Gas zuführt, wobei das Verhältnis von zugeführtem Gasvolumen zu der Menge an durchlaufendem Werkstoff oder der Druck des zugeführten Gases im wesentlichen konstant gehalten wird.

14. Verfahren nach Anspruch 13, dadurch gekennzeichnet, daß man dem Werkstoff-Flüssigkeits-Gemisch 10 bis 40 Volumen-% Gas, bezogen auf das Volumen des fertigen gasblasenhaltigen Werkstoffs, zuführt.

15. Verfahren nach einem der Ansprüche 13 oder 14, dadurch gekennzeichnet, daß man das Gas mit einem Überdruck von 0,5 bis 4 bar zuführt.

16. Verfahren nach einem der Ansprüche 13 bis 15, dadurch gekennzeichnet, daß der Werkstoff zementgebundener oder kunstharzgebundener Mörtel, Putz oder Beton ist.
